# EUROPEAN PATENT SPECIFICATION

(11) **EP 3 652 842 B1**
(45) Date of publication and mention of the grant of the patent: **17.08.2022**
(21) Application number: 17917870.2
(22) Date of filing: 12.07.2017
(51) Int. Cl.: H02K 7/10, D06F 39/00, H02K 7/116, H02K 16/00, B08B 3/02

(54) **PRESSURE WASHER WITH A MOTOR ARRANGEMENT**
HOCHDRUCKREINIGER MIT EINER MOTORANORDNUNG
NETTOYEUR HAUTE PRESSION AVEC UN ARRANGEMENT DE MOTEUR

(43) Date of publication of application: 20.05.2020
(73) Proprietor: Techtronic Outdoor Products Technology Limited, Hamilton HM12 (BM)
(72) Inventor: ESCHRICH, Sven, Dongguan, Guangdong (CN); LAM, Chin Hung Ricky, New Territories, Hong Kong (HK)
(74) Representative: Novagraaf Group
(86) International application number: PCT/CN2017/092613
(87) International publication number: WO 2019/010646

(56) References cited:
- CN-A- 104 912 020
- CN-A- 106 351 290
- CN-U- 202 402 248
- CN-U- 206 110 238
- DE-A1-102008 039 847
- DE-A1-102015 226 836
- JP-A- S5 922 596
- US-A- 5 667 141

## Description

This invention relates to a pressure washer with a motor arrangement according to the preamble of claim 1.

In existing motorized pressure washers, usually a long stack hybrid motor is used for operating a high-pressure pump to pressurize the water in the pressure washers. However, if such a motor breaks down during use, the pressure washer cannot operate until the motor is repaired, which delays the work on hand. A pressure washer according to the preamble of claim 1 is known from US 5,667,141. This pressure washer comprises a plurality of motors,

It is thus an object of the present invention to provide a pressure washer with a motor arrangement in which the aforesaid shortcoming is mitigated, or at least to provide a useful alternative to the public.

A pressure washer according to the invention is defined in independent claim 1.

According to the present invention, there is provided a motorized pressure washer including a motor arrangement including at least one AC motor with an output, at least one DC motor with an output, a power transmission mechanism including a first coupling member and a second coupling member, wherein said power transmission mechanism is coupled with said output of said AC motor *via* said first coupling member and is coupled with said output of said DC motor *via* said second coupling member, and a pump coupled to an output of said power transmission mechanism of said motor arrangement and drivenable by said motor arrangement, **characterized in that** said first coupling member is a first one-way clutch.

An embodiment of a motor arrangement of the pressure washer according to an embodiment of the present invention will now be described, by way of an example only, with reference to the following drawings, in which:
Fig. 1 is a perspective view of a motor arrangement according to an embodiment of the present invention;
Fig. 2 is a schematic sectional view of a part of the motor arrangement of Fig. 1; and
Fig. 3 is a schematic view of a part of the motor arrangement of Fig. 1.

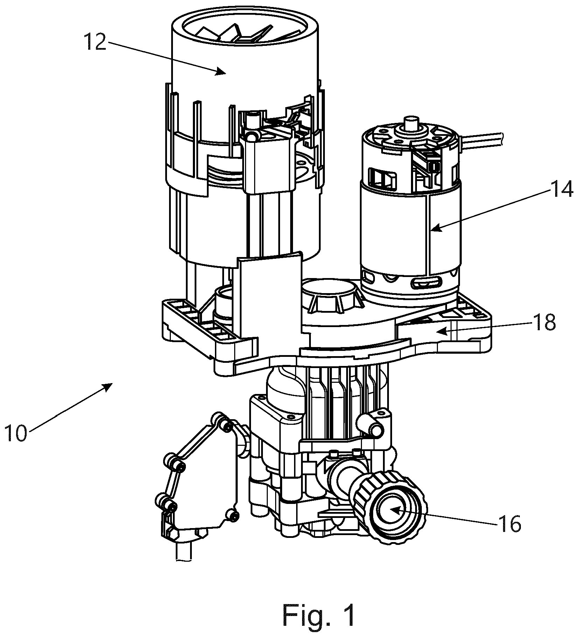

Fig. 1 shows a perspective view of a motor arrangement according to an embodiment of the present invention, generally designated as 10. The motor arrangement 10 includes an AC motor 12 and a DC motor 14 which are coupled with a working member, such as a high-pressure pump 16, *via* a power transmission mechanism 18. The AC motor 12 and the DC motor 14 are arranged in parallel with each other.

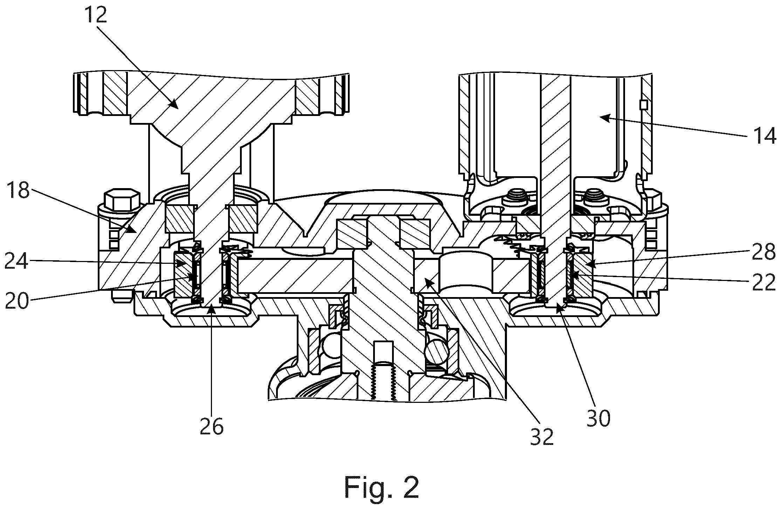

As shown in more detail in Fig. 2, the power transmission mechanism 18 includes two one-way clutches 20, 22. The one-way clutch 20 is coupled with and located between a pinion 24 and an output shaft 26 of the AC motor 12; and the one-way clutch 22 is coupled with and located between a pinion 28 and an output shaft 30 of the DC motor 14. Both the one-way clutches 20, 22 are in mesh with a central gear 32 for operating the high-pressure pump 16. At any time, only one of the AC motor 12 and DC motor 14 operates. When the AC motor 12 operates, the pinion 24 rotates and brings about corresponding rotation of the one-way clutch 20, which in turn brings about rotation of the central gear 32 of the pump 16, to operate the pump 16 to pressurize the water in a pressure washer. When the DC motor 14 operates, the pinion 28 rotates and brings about corresponding rotation of the one-way clutch 22, which in turn brings about rotation of the central gear 32 of the pump 16, to operate the pump 16 to pressurize the water in a pressure washer.

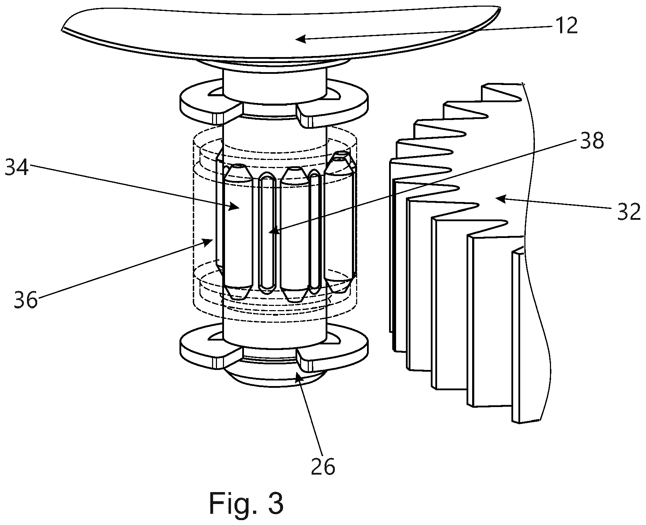

As shown in Fig. 3, the one-way clutches 20, 22 may be roller-type one-way clutches each with an outer ring (not shown), a plurality of rollers 34 which allow the one-way clutches 20, 22 to rotate in one direction, and an inner ring 36 with a plurality of indentations 38 on its inner surface which trap the rollers 34, thus preventing the clutches 20, 22 to rotate in an opposite direction.

Thus, by way of the above arrangement, when the AC motor 12 is operated (ON), the output shaft 26 of the AC motor 12 rotates and drives, *via* the one-way clutch 20, the pinion 24 to rotate, which in turn brings about rotational movement of the central gear 32. When the AC motor 12 is thus operated, the DC motor 14 is OFF and its output shaft 30 is also stationary. Although rotation of the central gear 32 will bring about rotational movement of the outer ring of the one-way clutch 22, because of the construction of the one-way clutch 22, such will not bring about corresponding movement of the inner ring 36 of the one-way clutch 22, and thus it will not bring about rotational movement of the output shaft 30 of the DC motor 14. Thus, no energy from the AC motor 12 is wasted on driving the DC motor 14.

Similarly, when the DC motor 14 is operated (ON), the output shaft 30 of the DC motor 14 rotates and drives, *via* the one-way clutch 22, the pinion 28 to rotate, which in turn brings about rotational movement of the central gear 32. When the DC motor 14 is thus operated, the AC motor 12 is OFF and its output shaft 26 is also stationary. Although rotation of the central gear 32 will bring about rotational movement of the outer ring of the one-way clutch 20, because of the construction of the one-way clutch 20, such will not bring about corresponding movement of the inner ring 36 of the one-way clutch 20, and thus it will not bring about rotational movement of the output shaft 26 of the AC motor 12. Thus, no energy from the DC motor 14 is wasted on driving the AC motor 12.

It should be understood that the above only illustrates an example whereby the present invention may be carried out, and that various modifications and/or alterations may be made thereto without departing from the scope of the invention as defined by claim 1.

It should also be understood that various features of the invention which are, for brevity, described in the context of a single embodiment, may also be provided separately or in any appropriate sub-combinations as long as they are covered by the definition of claim 1.

## Claims

1. A motorized pressure washer including:
a motor arrangement (10) including: at least one AC motor (12) with an output, at least one DC motor (14) with an output, a power transmission mechanism (18) including a first coupling member (20) and a second coupling member (22),
wherein said power transmission mechanism is coupled with said output of said AC motor *via* said first coupling member and is coupled with said output of said DC motor *via* said second coupling member, and
a pump (16) coupled to an output (32) of said power transmission mechanism of said motor arrangement and drivenable by said motor arrangement,
**characterized in that**
said first coupling member is a first one-way clutch.

2. A motorized pressure washer according to Claim 1 **characterized in that** said power transmission mechanism includes an output (32) which is adapted to be coupled to a working member (16).

3. A motorized pressure washer according to any of the preceding claims **characterized in that** said second coupling member is a second one-way clutch.

4. A motorized pressure washer according to Claim 1 or2 **characterized in that**said first one-way clutch is a roller-type one-way clutch.

5. A motorized pressure washer according to Claim 4 **characterized in that** said roller-type one-way clutch includes an outer ring, a plurality of rollers (34), and an inner ring (36) with a plurality of indentations (38) on its inner surface.

## Patentansprüche

1. Motorisierter Hochdruckreiniger, einschließend:
eine Motoranordnung (10), die einschließt: mindestens einen Wechselstrommotor (12) mit einem Ausgang, mindestens einen Gleichstrommotor (14) mit einem Ausgang, einen Kraftübertragungsmechanismus (18), der ein erstes Kopplungselement (20) und ein zweites Kopplungselement (22) einschließt, wobei der Kraftübertragungsmechanismus über das erste Kopplungselement an den Ausgang des Wechselstrommotors gekoppelt ist und über das zweite Kopplungselement an den Ausgang des Gleichstrommotors gekoppelt ist, und
eine Pumpe (16), die an einen Ausgang (32) des Kraftübertragungsmechanismus der Motoranordnung gekoppelt ist und durch die Motoranordnung antreibbar ist,
**dadurch gekennzeichnet, dass**
das erste Kopplungselement eine erste Freilaufkupplung ist.

2. Motorisierter Hochdruckreiniger nach Anspruch 1, **dadurch gekennzeichnet, dass** der Kraftübertragungsmechanismus einen Ausgang (32) einschließt, der dazu ausgelegt ist, an ein Arbeitselement (16) gekoppelt zu sein.

3. Motorisierter Hochdruckreiniger nach einem der vorstehenden Ansprüche, **dadurch gekennzeichnet, dass** das zweite Kopplungselement eine zweite Freilaufkupplung ist.

4. Motorisierter Hochdruckreiniger nach Anspruch 1 oder 2, **dadurch gekennzeichnet, dass** die erste Freilaufkupplung eine Rollen-Freilaufkupplung ist.

5. Motorisierter Hochdruckreiniger nach Anspruch 4, **dadurch gekennzeichnet, dass** die Freilaufkupplung einen Außenring, eine Vielzahl von Rollen (34) und einen Innenring (36) mit einer Vielzahl von Vertiefungen (38) auf seiner Innenoberfläche einschließt.

## Revendications

1. Nettoyeur haute pression motorisé incluant :
un agencement de moteur (10) incluant : au moins un moteur CA (12) avec une sortie, au moins un moteur CC (14) avec une sortie, un mécanisme de transmission de puissance (18) incluant un premier élément de couplage (20) et un deuxième élément de couplage (22), dans lequel ledit mécanisme de transmission de puissance est couplé à ladite sortie dudit moteur CA *via* ledit premier élément de couplage et est couplé à ladite sortie dudit moteur CC *via* ledit deuxième élément de couplage, et
une pompe (16) couplée à une sortie (32) dudit mécanisme de transmission de puissance dudit agencement de moteur et pouvant être entraînée par ledit agencement de moteur,
**caractérisé en ce que**
ledit premier élément de couplage est un premier embrayage unidirectionnel.

2. Nettoyeur haute pression motorisé selon la revendication 1 **caractérisé en ce que** ledit mécanisme de transmission de puissance inclut une sortie (32) qui est conçue pour être couplée à un élément de travail (16).

3. Nettoyeur haute pression motorisé selon l'une quelconque des revendications précédentes **caractérisé en ce que** ledit deuxième élément de couplage est un deuxième embrayage unidirectionnel.

4. Nettoyeur haute pression motorisé selon la revendication 1 ou 2 **caractérisé en ce que** ledit premier embrayage unidirectionnel est un embrayage unidirectionnel de type à rouleau.

5. Nettoyeur haute pression motorisé selon la revendication 4 **caractérisé en ce que** ledit embrayage unidirectionnel de type à rouleau inclut un anneau externe, une pluralité de rouleaux (34), et un anneau interne (36) avec une pluralité d'indentations (38) sur sa surface interne.
